# EUROPEAN PATENT SPECIFICATION

(11) **EP 1 293 401 B1**
(45) Date of publication and mention of the grant of the patent: **21.06.2006**
(21) Application number: 02018134.3
(22) Date of filing: 14.08.2002
(51) Int. Cl.: B60R 22/44

(54) **Seatbelt retractor**
Sicherheitsgurtaufroller
Rétracteur de ceinture de sécurité

(30) Priority: 12.09.2001 JP 2001276110
(43) Date of publication of application: 19.03.2003
(73) Proprietor: TAKATA CORPORATION, Minato-ku, Tokyo 106-8510 (JP)
(72) Inventor: Tanaka, Koji, Minato-ku, Tokyo 106-8510 (JP); Tanji, Hiromasa, Minato-ku, Tokyo 106-8510 (JP); Matsui, Tomoji, Minato-ku, Tokyo 106-8510 (JP)
(74) Representative: Banzer, Hans-Jörg

(56) References cited:
- US-A- 4 669 680
- US-A- 5 005 777
- US-A- 5 244 231
- US-A1- 2001 004 030

## Description

### [Technical Field of the Invention]

The present invention relates to a technical field of a seatbelt retractor for controlling the extraction and retraction of a seatbelt that is equipped in a vehicle such as an automobile for restraining and protecting an occupant, and more specifically, it relates to the technical field of the seatbelt retractor in that the occupant is more securely restrained and protected by retracting the seatbelt with a motor based on a situation outside the vehicle and operational conditions of the seatbelt so as to control the belt tension while when non-wearing the seatbelt, it is mechanically retracted with a spring.

### [Description of the Related Art]

Hitherto, in a seatbelt apparatus equipped in a vehicle such as an automobile, upon an emergency such as a vehicle collision in which large deceleration is applied to the vehicle, an occupant is protected by being restrained and blocked from jumping out of a seat with a seatbelt.

Such a seatbelt apparatus is provided with a seatbelt retractor for retracting a seatbelt. The seatbelt retractor comprises a spring such as a power spring for constantly urging a spool for winding the seatbelt in the winding direction. By virtue of the urging force of the spring, the seatbelt is wound about the spool when non-wearing the seatbelt. When wearing the seatbelt, it is extracted against the spring urging force so as to make wear it on an occupant. Upon the emergency as mentioned above, the seatbelt retractor blocks the extraction of the seatbelt by blocking the rotation of the spool in the extraction direction because of the operation of locking means. The occupant is thereby restrained and protected securely with the seatbelt upon the emergency.

US 4,669,680 describes a seatbelt retractor which is configured to wind up a seatbelt webbing by means of motor power while a spring is additionally provided so as to remove slack from the seatbelt webbing when it is wound. The seatbelt retractor comprises a buckle switch for detecting whether or not a tongue plate attached to the seatbelt webbing is engaged with a buckle and a webbing switch for detecting whether or not the seatbelt webbing has been fully wound up. When the tongue plate is disengaged from the buckle, which is detected by means of the buckle switch, the motor is turned on. The motor is coupled to a take-up shaft by means of a centrifugal clutch and drives the rotation of the take-up shaft. The motor is stopped after a period of five seconds or when the webbing switch changes its state, thereby indicating that the seatbelt webbing is fully wound up. Any remaining slack in the seatbelt webbing is then removed by the spring.

### [Problems to be Solved by the Invention]

In such a conventional seatbelt apparatus, during wearing the seatbelt, a substantially constant belt tension due to the spring urging force is applied to the seatbelt, so that the seatbelt retractor operates in the substantially same manner regardless of situations between one's own vehicle and surrounding objects. Although the conventional seatbelt apparatus can securely restrain and protect an occupant upon an emergency, as described above, it cannot be insisted that the apparatus can control the occupant comfortably during other than the emergency. Moreover, upon the emergency, it is preferable to protect the occupant more securely by firmly restraining the occupant.

Then, the inventor has filed a patent application on a seatbelt retractor, which can restrain and protect an occupant more efficiently and more comfortably to the occupant by controlling the rotation of a spool so as to adjust a belt tension with a motor with situations between one's own vehicle and surrounding objects considering them thereinto while can simply and securely perform the adjustment of the belt tension with a simple structure for adjusting the belt tension (Japanese Patent Application No. 2000-238735).

The seatbelt retractor according to the invention of the patent application will be easily understood in detail with reference to the application and drawings of the filed patent application; however, for the present, the part relating to the present invention will be simply described.

Figs. 1 to 3 are drawings showing the seatbelt retractor according to the invention of the patent application.

As shown in Figs. 1 and 2, a seatbelt retractor 1 according to the invention of the patent application comprises at least a power-transmission gear mechanism 11 for transmitting the power of a motor 10, a reducer mechanism 12 comprising a planetary gear mechanism for reducing the rotation of the motor 10 transmitted from the power-transmission gear mechanism 11 to transmit it to a spool 4, a power-transmission route switching mechanism 13 for selectively switching to either one of the states that the power of the motor 10 is transmitted to the spool 4 and the rotation of the spool 4 is not transmitted to the motor 10, and spring means 14 for urging the spool 4 in the winding direction of a seatbelt 3 which is the CCW (counterclockwise) direction. The operation of this seatbelt retractor 1 will be described.

### (1) Non-Operational State of Seatbelt Retractor 1 (Total Amount Seatbelt Stored State)

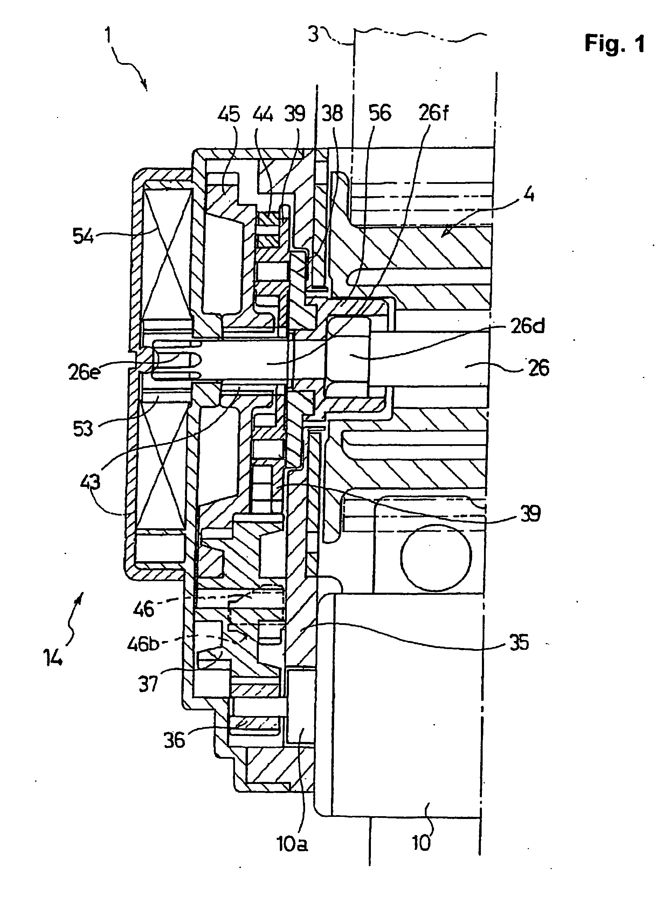

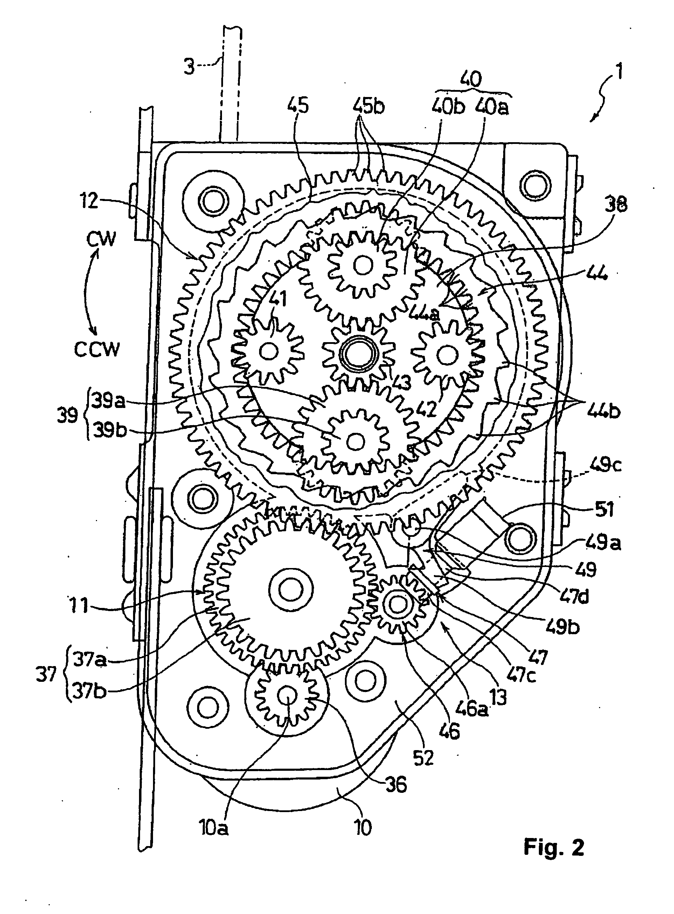

In the non-operational state of the seatbelt retractor 1, the total of seatbelt webbing 3 is wound around the spool 4 by the spring means 14, while the motor 10 is not in operation. In the non-operational state, as shown in Fig. 2, a motor gear 36, connecting gears 37, and a switching gear 46, which are attached to a rotational shaft 10a of the motor 10, are not rotated, so that the switching gear 46 is set at a limited position perpendicular to the plane of Fig. 2 on the other side across the drawing (right limited position shown in Fig. 1), and a plunger 47 protrudes at most from a cylinder housing 51 so that a front inclined surface (not shown) of an abutting part 47c abuts a front inclined surface 46b of the switching gear 46. In this state, a retainer lever 49 is set at a position that a retainer claw 49c does not make engagement with a ratchet gear 44b of an internal gear 44 so as to set a power-transmission route at off. Thereby, the internal gear 44 is rotatable in any one of the belt extracting direction, which is the CW (clockwise) direction, and the belt winding direction, which is the CCW direction.

### (2) Seatbelt Extracting Operation

When the seatbelt webbing 3 is extracted from the seatbelt extractor 1 in the non-operational state mentioned above, the spool 4 rotates in the belt extracting CW direction. Then, a second torque-transmission part 26d of a torsion bar 26 and a second carrier 56 shown in Fig. 1 simultaneously rotate in the belt extracting CW direction. Since a first carrier 38 is thereby rotated in the same CW direction, planetary gears 39 and 40 are to move around a sun gear 43 in the same CW direction. Therefore, respective large planetary gears 39a and 40a of the planetary gears 39 and 40 are to rotate in the belt extracting CW direction so as to rotate the sun gear 43 in the belt winding CCW direction, while on the other hand, respective small planetary gears 39b and 40b are to rotate in the belt winding CCW direction so as to rotate the internal gear 44 in the belt winding CCW direction. At this time, a reducer gear 45 is constantly meshed with the sun gear 43; a small-diameter connecting gear 37b of the connecting gears 37 is constantly meshed with an outer tooth 45b of the reducer gear 45; and the motor gear 36 and the switching gear 46 are constantly meshed with a large-diameter connecting gear 37a being integral with the small-diameter connecting gear 37b, so that the sun gear 43 does not rotate because a predetermined rotational resistance is applied to the sun gear 43, whereas the internal gear 44 is freely rotatable as mentioned above. At this time, the small planetary gears 39b and 40b also rotate in the belt extracting CW direction together with the respective large planetary gears 39a and 40a while the internal gear 44 rotates in the same CW direction.

Since the sun gear 43 does not rotate, the rotation of the spool 4 during extraction of the seatbelt webbing 3 in the belt extracting CW direction is not transmitted to the switching gear 46, so that the power-transmission route switching mechanism 13 does not operate maintaining the power-transmission route between the spool 4 and the motor 10 at off so that the rotation of the spool 4 is not transmitted to the motor 10, which does not have an effect of the rotation of the spool 4.

In addition, when extracting the belt, the second torque-transmission part 26d is rotated by the rotation of the spool 4, so that a return spring 54 of the spring means 14 is wound up through a first shaft 26f and a bushing 53 fitted to spline grooves 26e of the first shaft 26f so as to gradually increase the spring force corresponding to the amount of the belt extraction.

### (3) Seatbelt Winding Operation by Spring means 14

From the extracted state of the seatbelt webbing 3, when taking the hand off from the seatbelt webbing 3, the spool 4 is rotated in the belt winding CCW direction by the urging force of the wound-up return spring 54 of the spring means 14 through the bushing 53, the first shaft 26f, the second torque-transmission part 26d, and the second carrier 56. Simultaneously, the first carrier 38 is rotated by the rotation of the second carrier 56 in the same CCW direction, so that the planetary gears 39 and 40 are to move around the sun gear 43 in the same CCW direction. Therefore, the respective large planetary gears 39a and 40a of the planetary gears 39 and 40 are to rotate in the belt winding CCW direction so as to rotate the sun gear 43 in the belt extracting CW direction, while on the other hand, the respective small planetary gears 39b and 40b of the planetary gears 39 and 40 are to rotate in the belt extracting CW direction so as to rotate the internal gear 44 in the belt extracting CW direction. At this time, whereas a predetermined rotational resistance is applied to the sun gear 43, as mentioned above, because the internal gear 44 is freely rotatable, the sun gear 43 does not rotate. Therefore, the small planetary gears 39b and 40b also rotate together with the respective large planetary gears 39a and 40a in the belt winding CCW direction. Then, the internal gear 44 is finally rotated in the belt winding CCW direction by the rotation of the small planetary gears 39b and 40b in the belt winding CCW direction.

Because the sun gear 43 does not rotate, the rotation of the spool 4 during winding of the seatbelt webbing 3 in the belt winding CCW direction due to the spring means 14 is not transmitted to the switching gear 46, so that the power-transmission route switching mechanism 13 does not operate, leaving the power-transmission route between the spool 4 and the motor 10 at off. Therefore, the rotation of the spool 4 is not transmitted to the motor 10, which does not have an effect of the rotation of the spool 4.

### (4) Seatbelt Winding Operation by Motor Power

As shown in Fig. 2, the retainer claw 49c of the retainer lever 49 is not brought into engagement with the ratchet gear 44b of the internal gear 44 separating therefrom, so that a motor-power transmission device is maintained at off. At the off of the motor-power transmission device, the internal gear 44 is freely rotatable.

In this state, when the motor 10 is driven so that the spool 4 rotates in the belt winding CCW direction, the motor gear 36 fixed to the rotational shaft 10a of the motor 10 and shown in Fig. 2 rotates in the belt winding CCW direction (counterclockwise direction in Fig. 2) and the large-diameter gear 37a of the connecting gears 37 meshed with the motor gear 36 rotates in the belt extracting CW direction (clockwise direction in Fig. 2), so that the connecting gears 37 are reduced in rotation and rotated in the belt extracting CW direction. Then, as the reducer gear 45 meshed with the small-diameter gear 37b of the connecting gears 37 is further reduced in rotation and rotated in the belt winding CCW direction, the sun gear 43 rotating integrally with the reducer gear 45 rotates in the same CCW direction at the same speed as that of the reducer gear 45. By the rotation of the sun gear 43, the planetary gears 39 and 40 meshed with the sun gear 43 are further reduced in rotation and rotated on their axes in the belt extracting CW direction, and the internal gear 44 meshed with the planetary gears 39 and 40 rotates in the same CW direction. As the internal gear 44 rotates at this time, the planetary gears 39 and 40 do not rotate around the sun gear 43. Therefore, because the first carrier 38 rotatably supporting the planetary gears 39 and 40 and idle gears 41 and 42 does not rotate, the power of the motor 10 is not transmitted to the spool 4 rotatably connected to the first carrier 38 via the second carrier 56 so that the spool 4 does not rotate by the power of the motor 10.

On the other hand, by the rotation of the connecting gears 37, simultaneously, the switching gear 46 meshed with the large-diameter gear 37a of the connecting gears 37 also rotates in the belt winding CCW direction. In this case, since the large-diameter gear 37a of the connecting gears 37 and the switching gear 46 are meshed in helical-gear engagement, so that an axial force is applied to the switching gear 46 in an axial direction. By the axial force, the switching gear 46 is moved in the direction perpendicular to the plane of Fig. 2 on this side of the drawing. At this time, with the switching gear 46 moving in the axial direction, an inclined surface of the abutting part 47c in the plunger 47 slides along the inclined surface 46b of the switching gear 46 so as to move in the direction that the plunger 47 separates from the switching gear 46 and to be brought into the cylinder housing 51.

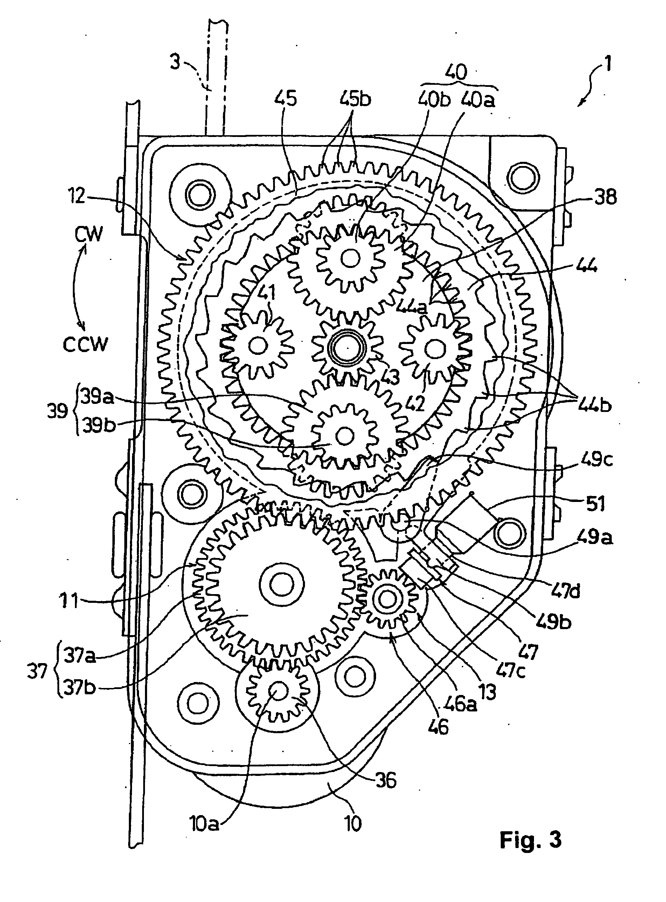

Then, as the switching gear 46 is finally supported to the second retainer 35 in the thrust direction, the switching gear 46 is stopped from moving in the axial direction and is arranged at a limited position on this side of Fig. 2. In this state, the plunger 47 is brought into the cylinder housing 51 to the utmost, so that the end of the abutting part 47c abuts the outer periphery of a gear part 46a of the switching gear 46. By the pulling-in operation of the plunger 47, as shown in Fig. 3, a retainer-lever operational part 47d presses an operational-lever 49b of the retainer lever 49 so that the retainer lever 49 rotates about a rotational shaft 49a and the retainer claw 49c is arranged at a position being engageable with the ratchet gear 44b.

Then, by the rotation of the internal gear 44 in the belt extracting CW direction, the ratchet gear 44b is brought into engagement with the retainer claw 49c so as to stop the rotation of the internal gear 44. When the motor 10 is driven in such a manner, the retainer lever 49 is promptly operated so as to stop the rotation of the internal gear 44 in the belt extracting CW direction and arrange the motor-power transmission device between the spool 4 and the motor 10 at on.

In this state, as the planetary gears 39 and 40 are rotated on their axes by the power of the motor 10, the planetary gears 39 and 40 are reduced in rotation and rotated around the sun gear 43 in the belt winding CCW direction along internal teeth 44a of the internal gear 44 by stopping the rotation of the internal gear 44. Accordingly, the first and second carriers 38 and 40 rotate at the orbital speed of the planetary gears 39 and 40 in the belt winding CCW direction, and the spool 4 rotates in the belt winding CCW direction. In such a manner, the rotation of the motor 10 is reduced in rotation at a predetermined reduction ratio by the reducer mechanism 12 and is transmitted, so that the spool 4 is rotated.

By the rotation of the spool 4 in the belt winding CCW direction, the seatbelt webbing is wound around the spool 4 by the power of the motor 10.

In addition, in this case, the return spring 54 is unwound by the rotation of the second carrier 56 in the belt winding CCW direction, so that the spring force of the return spring 54 is reduced.

### (5) Cancellation of Seatbelt Winding Operation by Motor Power

When the motor 10 is rotationally driven in the direction opposite to the belt winding CCW direction, i.e., in the belt extracting CW direction, the spool 4 is rotated in the belt extracting CW direction via the gears 36, 37, 45, 43, 39, and 40, the first and second carriers 38 and 56, so as to release the winding of the seatbelt webbing 3. By the rotation of the connecting gears 37, the switching gear 46 also rotates inversely; at this time, the large-diameter connecting gear 37a is meshed with the switching gear 46 in helical-gear engagement, so that a axial force in the direction opposite to that mentioned above is applied to the switching gear 46 from the large-diameter connecting gear 37a. Then, the switching gear 46 moves to a position perpendicular to the plane of Fig. 3 on the other side across the drawing from the limited position on this side of the drawing. Then, by the movement of the switching gear 46, when the upper end of the inclined surface 46b of the switching gear 46 passes by the lower end of an inclined surface 47b in the plunger 47, the inclined surface 47b of the plunger 47 abuts the inclined surface 46b while protruding along the inclined surface 46b. By the protruding operation of the plunger 47, the retainer-lever operational part 47d of the plunger 47 rotates the retainer lever 49 toward the non-operational position.

Finally, the switching gear 46 and the plunger 47 become the initial non-operational state together. In this non-operational state, the retainer lever 49 is located at the non-operational position, so that the retainer claw 49c is arranged at the non-engagement position that the internal gear 44 is not brought into engagement with the ratchet gear 44b. That is, the power-transmission route switching mechanism 13 is set at off. Thereby, the internal gear 44 becomes rotatable, and the spool 4 and the motor 10 are rotationally free from each other.

In such a manner, a motor-power transmission device 5 for transmitting the power of the motor 10 to the spool 4 comprises the power-transmission gear mechanism 11, reducer mechanism 12, and power-transmission route switching mechanism 13. In this case, when the retainer claw 49c is not brought into engagement with the ratchet gear 44b, the motor-power transmission device 5 is at off and the power of the motor 10 is not transmitted to the spool 4, whereas when the retainer claw 49c is brought into engagement with the ratchet gear 44b, the motor-power transmission device 5 is at on and the power of the motor 10 is transmitted to the spool 4.

By the power of the motor 10 controlled with a CPU 6, the winding of the seatbelt webbing 3 is controlled according to situations of occupants in the vehicle, driving situations outside the vehicle, or operational situations of the seatbelt webbing 3.

Next, in the seatbelt retractor 1, the case will be considered in which the winding of the seatbelt webbing 3 is performed by the spring means 14 for storing the entire amount of the seatbelt webbing 3.

As described above, when winding the seatbelt webbing 3 by the spring means 14, the spool 4 is rotated by the urging force of the spring means 14 in the belt winding CCW direction, so that the internal gear 44 is to rotate in the belt winding CCW direction, whereas the internal gear 44 is to rotate in the belt extracting CW direction when the motor 10 rotates in the belt winding CCW direction. Therefore, when the rotational rate of the internal gear 44 in the belt winding CCW direction during the winding of the seatbelt webbing 3 by the spring means 14 is V_{S}, and the rotational rate of the internal gear 44 in the belt extracting CW direction during the rotation of the motor 10 in the belt winding CCW direction is V_{M}, if V_{S} > V_{M}, the internal gear 44 rotates in the belt winding CCW direction, whereas, inversely, if V_{M} > V_{S}, the internal gear 44 rotates in the belt extracting CW direction.

Also, as described above, during the rotation of the motor 10 in the belt winding CCW direction, the retainer claw 49c of the retainer lever 49 is located at a position engageable with the ratchet gear 44b of the internal gear 44.

Therefore, when being V_{S} > V_{M}, the internal gear 44 rotates in the belt winding CCW direction, so that even when the retainer claw 49c is located at a position engageable with the ratchet gear 44b, the retainer claw 49c is not brought into engagement with the ratchet gear 44b and the motor-power transmission device 5 is set at off, while when being V_{M} > V_{S}, the internal gear 44 rotates in the belt extracting CW direction, the retainer claw 49c is brought into engagement with the ratchet gear 44b and the motor-power transmission device 5 is set at on.

Furthermore, in the seatbelt retractor 1 according to the filed patent application, during the non-wearing of the seatbelt webbing 3, the entire amount of the seatbelt webbing 3 is mechanically wound by the spring means 14. In addition, in this specification and drawings, the entire amount of the seatbelt webbing 3 indicates the wound state of the seatbelt webbing 3 during the non-operational state of the seatbelt retractor 1 described above, i.e., it indicates that during the non-wearing of the seatbelt webbing 3, there is no slack in the seatbelt webbing 3 so as not to be wound any more.

Then, the part relating to the present invention of the structure of the seatbelt retractor 1 according to the aforementioned patent application is simply summarized and schematically shown in Fig. 4.

As shown in Fig. 4, the seatbelt retractor 1 according to the formally filed patent application comprises at least the spool 4 for winding the seatbelt webbing 3, the spring means 14 for constantly urging the spool 4 in the belt winding direction and for winding the seatbelt webbing 3 so as to store the entire amount of the seatbelt webbing 3 during the non-wearing of the seatbelt webbing 3, the motor 10 for rotating the spool 4 to wind the seatbelt webbing 3 according to the vehicle situations and the like mentioned above, the motor-power transmission device 5 for controlling the transmitting and shutting off the power of the motor 10 to the spool 4, a motor control device (CPU) 6 for controlling the drive of the motor 10 with an electrical signal, and a buckle switch 7 for outputting an electrical buckle-engagement signal to the CPU 6 by turning on when a tongue is brought into engagement with a buckle and also for outputting an electrical buckle-cancellation signal by turning off when the engagement between the tongue and the buckle is cancelled.

By the way, as described above, in the seatbelt retractor 1 according to the filed patent application, in case that the entire amount of seatbelt webbing 3 is stored in the retractor in the non-wearing state thereof, the entire amount of the seatbelt webbing 3 is mechanically stored by the spring means 14.

However, because of the aging of spring characteristics of the return spring 54 in the spring means 14 due to the long term usage of the seatbelt retractor or the like, the winding force of the return spring 54 cannot be efficiently utilized, so that it may be difficult to wind the entire amount of the seatbelt webbing 3. Therefore, even when the winding force of the return spring 54 cannot be efficiently utilized because of the aging, etc., it is required to be able to securely store the entire amount of the seatbelt webbing 3.

In view of such a situation, the present invention has been made, and it is an object thereof to provide a seatbelt retractor capable of securely winding the entire amount of seatbelt webbing even when the winding force of a spring cannot be efficiently utilized.

### [Means for Solving the Problems]

According to the present invention, this object is achieved by a seatbelt retractor as defined in claim 1. The dependent claims define preferred and advantageous embodiments of the invention.

### [Operation]

In the seatbelt retractor according to the present invention configured in such a manner, the motor control device rotates the motor with a buckle-cancellation signal from the buckle switch while when the winding speed during the winding of the seatbelt webbing by the spring is reduced smaller than the normal winding speed to have a predetermined value, the motor-power transmission device is turned on so as to connect the motor-power transmission path. Thereby, even when the winding force due to the spring cannot be effectively utilized, the entire amount of the seatbelt webbing can be securely wound up.

In particular, when the winding speed of the seatbelt webbing during winding by the spring is reduced to be less than a predetermined value so that the winding speed by the motor power rather becomes larger than the winding speed of the seatbelt webbing during winding, which is input in the motor-power transmission device by the spring, the motor-power transmission device is turned on. Thereby, the motor-power transmission path is simply connected mechanically so that the seatbelt webbing is wound about the spool by the motor power.

Furthermore, when it is detected by the motor control device based on a motor current detection signal from the motor current detector that with the completion of seatbelt winding by the spool, the motor becomes a stalling state and the motor current increases, the motor is stopped. In such a manner, by simply detecting the increase in the motor current, the completion of seatbelt winding can be simply detected, so that the motor is securely stopped.

Furthermore, the motor control device preferably controls a driving output of the motor by corresponding to a period of time from the initiation of the motor rotation in the belt winding direction to the detection of the increase in the motor current. In such a manner, by controlling the driving output of the motor corresponding to the degree that the winding force due to the spring cannot be efficiently utilized, the driving of the motor is optimally controlled so that the motor power can be utilized efficiently.

### [Brief Description of the Drawings]

Fig. 1 is a partial sectional view partially showing a seatbelt retractor according to Japanese Patent Application No. 2000-238735.
Fig. 2 is a side view showing the seatbelt retractor shown in Fig. 1 except for spring means and showing an off state of a motor-power transmission device.
Fig. 3 is a side view showing the seatbelt retractor shown in Fig. 1 except for the spring means and showing an operated state of the motor-power transmission device.
Fig. 4 is a drawing of the seatbelt retractor 1 shown in Fig. 1 schematically showing configurations relating to the present invention.
Fig. 5 is a drawing similar to Fig. 4 and schematically showing a seatbelt retractor according to an embodiment of the present invention.
Fig. 6 is a drawing for illustrating the belt-winding operation of the seatbelt retractor shown in Fig. 5.
Fig. 7 is a drawing showing a flow for the belt-winding operation of the seatbelt retractor shown in Fig. 5.

### [Description of the Embodiments]

Embodiments according to the present invention will be described below with reference to drawings.

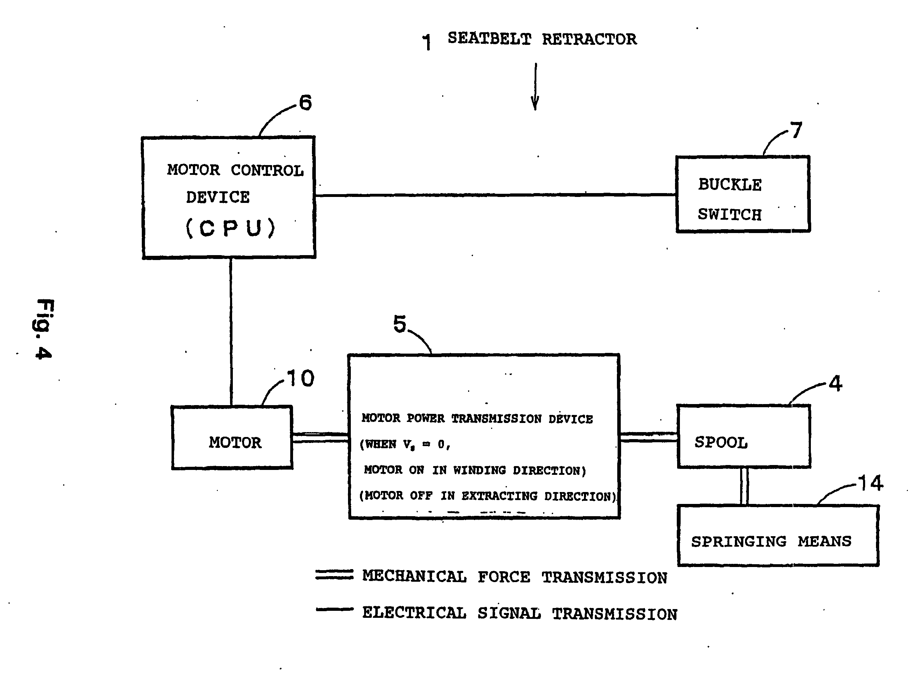

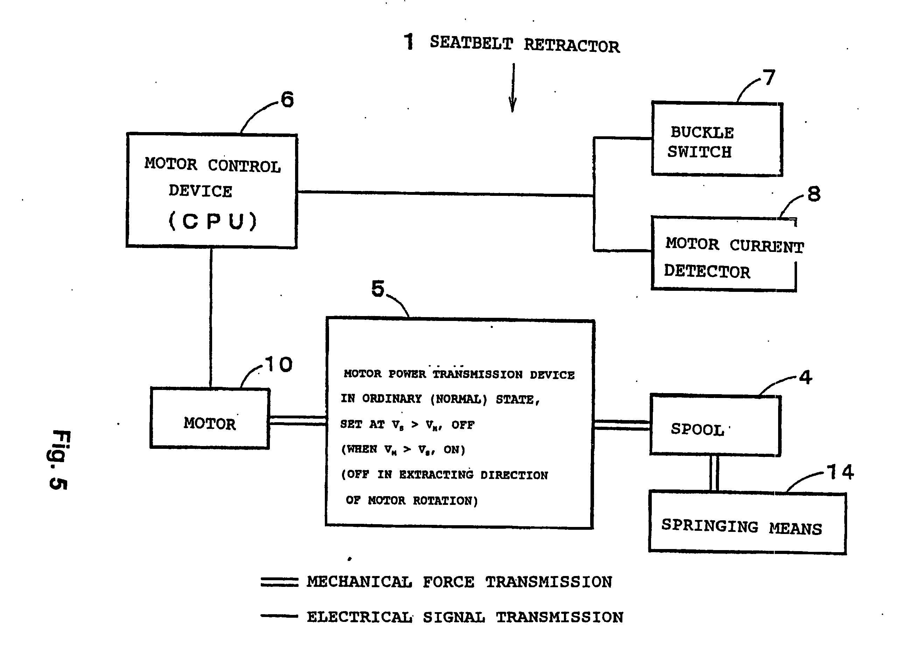

Fig. 5 schematically shows a seatbelt retractor according to an embodiment of the present invention and it is a drawing similar to Fig. 4. In addition, like reference characters designate like elements common to those in Figs. 1 to 4 of the filed patent application described above, and the detailed description thereof is omitted.

As shown in Fig. 5, in the seatbelt retractor 1 according to the embodiment, in addition to the seatbelt retractor 1 according to the applied invention described above, a motor-current detection signal from a motor current detector 8 is supplied to a motor control device 6. Also, in the seatbelt retractor 1 according to the embodiment, when the rotational speed V_{S} of the internal gear 44 of the motor-power transmission device 5 in the belt winding CCW direction during the winding of the seatbelt webbing 3 by the spring means 14 is set larger than the rotational speed V_{M} of the internal gear 44 in the belt extracting CW direction during the rotation of the motor 10 in the belt winding CCW direction (V_{S} > V_{M}) under ordinary circumstances (i.e., in a normal state that a return spring 54 of the spring means 14 substantially has initial spring characteristics without changes in the spring characteristics due to aging or the like).

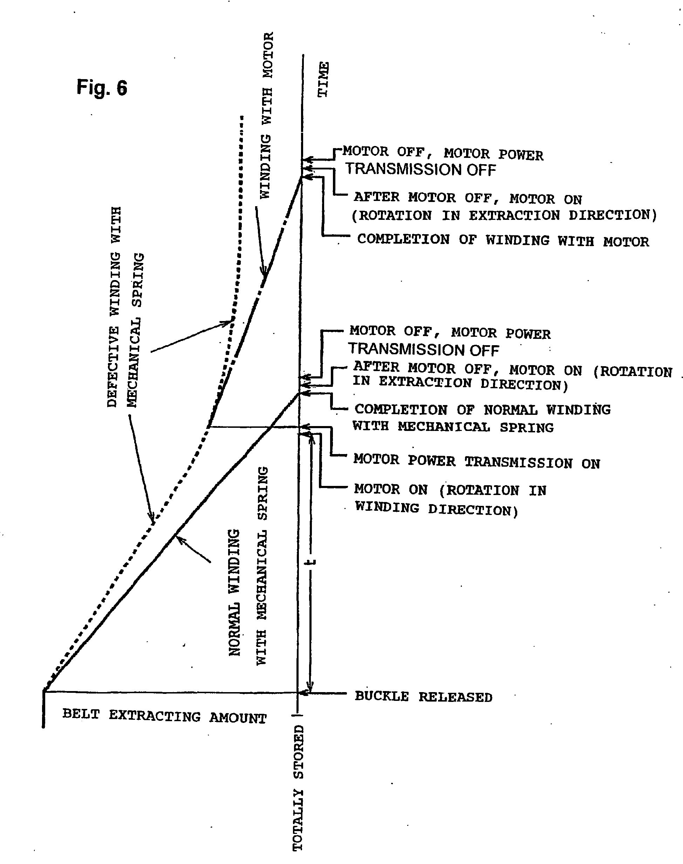

Furthermore, as shown in Fig. 6, in the seatbelt retractor 1 according to the embodiment, when a tongue is removed from a buckle in the wearing state of the seatbelt webbing 3, the seatbelt webbing is mechanically wound about the spool 4 by the urging force of the return spring 54 of the spring means 14 in the same way as that of a conventional one. At this time, when the belt winding by the spring means 14 is normal as indicated by the solid line in Fig. 6, the entire amount of the seatbelt webbing is directly wound by the spring means 14 (storing of the entire amount of the seatbelt webbing by the spring means 14).

When the belt winding by the spring means 14 is defective so that the entire amount of the seatbelt webbing is difficult to be wound, the entire amount of the seatbelt webbing, as indicated by the dash-dotted line in Fig. 6, is wound by the power of the motor 10. In this case, for winding the seatbelt webbing 3 by the motor 10, the motor-power transmission device 5 and the motor control device 6 are respectively configured as follows.

That is, the motor-power transmission device 5 is automatically turned on, as described above, by the reduction of the above-mentioned rotational speed V_{S} of the internal gear 44 during the winding of the seatbelt webbing 3 by the spring means 14 to be smaller than the above-mentioned rotational speed V_{M} of the internal gear 44 during the winding of the seatbelt webbing 3 by the power of the motor 10 (V_{S} < V_{M}), when a winding speed V_{BS} of the belt winding by the spool using the urging force of the spring means 14 is reduced to be a constant value V_{BSO} or less.

Thereby, the power of the motor 10 is transmitted to the spool 4 so as to wind the seatbelt webbing 3 by the power of the motor 10. At this time, the motor control device 6 controls the motor 10 so that the motor 10 winds the belt at a winding speed of the constant value V_{BSO}.

When the tongue is removed from the buckle, the buckle switch 7 is turned off so that the buckle-engagement signal, which has been input to the motor control device (CPU) 6, is lost. When the buckle-cancellation signal is supplied to the motor control device 6, it turns the motor 10 on in the belt winding direction after a lapse of a constant time t₁ since the buckle-cancellation signal is supplied. At this time, when the belt winding by the spring means 14 is normal, the motor-power transmission device 5 is not turned on because of V_{S} > V_{M} as described above, so that even when the motor 10 rotates in the belt winding direction, the power of the motor 10 is not transmitted to the spool 4.

Furthermore, in the motor control device 6, when the entire amount of the seatbelt webbing has been wound in the normal state of the belt winding by the spring means 14, the motor-power transmission device 5 is turned on so that the power of the motor 10 is transmitted to the spool 4 because the spool 4 stops rotation so that V_{S} = 0 i.e., V_{M} > V_{S}. However, since the spool 4 is in a state that the seatbelt webbing 3 cannot be wound any more, the motor 10 becomes a stalling state that the winding load is increased and the motor current increases. The motor control device 6 detects the increase in the motor current based on a current detection signal from the motor current detector 8 so as to turn the rotation of the motor 10 off.

In addition, the motor 10 may also be set to stop after a further lapse of a constant time since the motor 10 is turned on after the lapse of the constant time t since the buckle-cancellation. In this case, however, after the turning on of the motor 10, the winding of the seatbelt webbing 3 may be performed by the power of the motor 10 because of the defective winding of the seatbelt webbing 3 by the spring, so that the constant time is necessary to be set in view of this problem.

Moreover, since the motor-power transmission device 5 is turned on after turning off the rotation of the motor 10 by the increase in the motor current, the motor control device 6 turns off the motor-power transmission device 5 by turning on the motor 10 in the opposite direction (i.e., in the belt extraction direction). That is, while the transmission of the power of the motor 10 to the spool 4 is shut off, the motor 10 is turned off after the turning off of the motor-power transmission device 5.

Furthermore, in the motor control device 6, a period of time from the starting of the rotation of the motor 10 until the detection of increase in the motor current is counted (measured) with a counter, and then, the power of the motor 10 is computed in the basis of the obtained counted value and the established power of the motor 10, which is presently set up, so that the winding speed during the belt winding by the power of the motor 10 becomes the constant value V_{BSO}. By using the obtained value as the next established power, the present set-up power stored in the motor control device 6 is updated. When the power value obtained by the computation is the same as the present set-up power, the present set-up power is maintained as it is.

The other configurations of the seatbelt retractor 1 according to the embodiment are the same as those shown in Figs. 1 to 4 of the applied invention described above, and the structure of the seatbelt retractor 1 necessary for as the seatbelt retractor 1, although it is not the featured structure of the present invention, is the same as that disclosed in the filed patent application while the seatbelt retractor 1 according to the filed patent application can be easily understood by the specification after the publication as an unexamined patent, so that the detailed description is herein omitted.

Next, the control of the seatbelt winding operation of the seatbelt retractor according to the embodiment configured as above will be described.

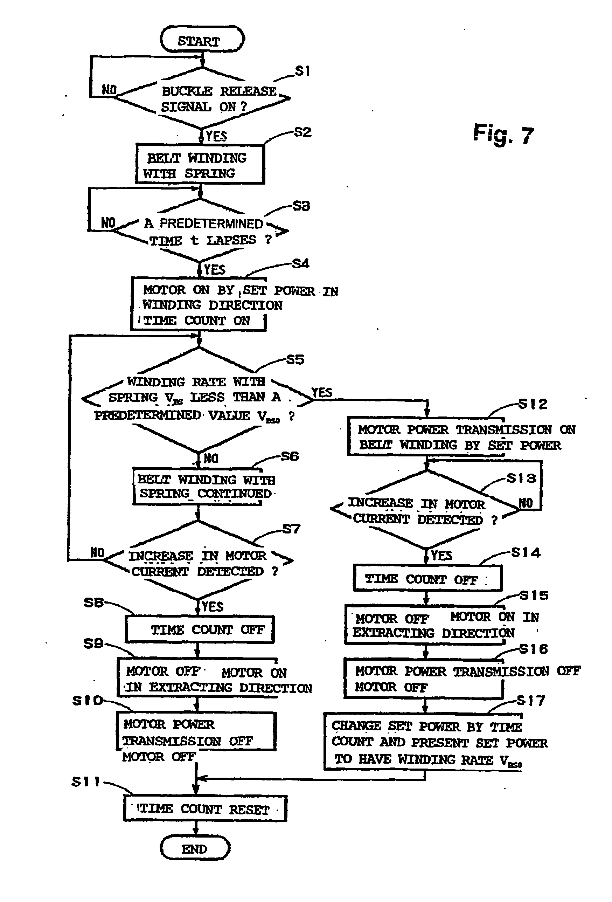

Fig. 7 is a drawing showing a flow of the seatbelt winding operation.

As shown in Fig. 7, first, at step S1, the presence of the buckle-cancellation signal from the buckle switch is determined. When the absence of the buckle-cancellation signal is determined, the process of step S1 is repeated. When the presence of the buckle-cancellation signal is determined, the tongue is removed from the buckle so that the belt winding is being performed by the spring means 14 at step S2. Then, the elapse of a predetermined time t after the buckle-cancellation signal is supplied at step S3 is determined. When no elapse of the predetermined time t is determined, the process of step S3 is repeated. When the elapse of the predetermined time t is determined, at step 4, the motor 10 is turned on so as to rotate in the belt winding direction while a time starts to be counted by a counter (not shown) disposed within the motor control device (CPU) 6. At this time, the motor-power transmission device 5 is not turned on as mentioned above, so that the power of the motor 10 is not transmitted to the spool 4.

Next, at step S5, the winding speed V_{BS} of the belt winding is determined weather being not larger than the predetermined value V_{BSO}. When the winding speed V_{BS} is determined to be larger than the predetermined value V_{BSO}, the belt winding by the spring means 14 is normal so that belt winding by the spring means 14 is continued as it is at step S6. Then, at step S7, the detection of the increase in the motor current is determined. When the detection of the increase in the motor current is not determined, since the belt winding by the spring means 14 is not yet completed, the processes on and after step S5 are repeated by returning to step S5. When the detection of the increase in the motor current is determined, the time counting is stopped at step S8, and after the motor 10 is turned off at step S9, it is turned on in the opposite direction, i.e., in the belt extraction direction. Subsequently, at step S10, the motor-power transmission device 5 is turned off while the motor 10 is turned off. Furthermore, at step S11, the time counting value of the counter is reset to be zero. In such a manner, the winding of the seatbelt webbing 3 by the spring means 14 is completed.

When at step S5, the winding speed V_{BS} of the belt winding is determined to be not larger than the predetermined value V_{BSO}, the winding of the seatbelt webbing 3 by the spring means 14 is defective so that the motor-power transmission device 5 is turned on at step S12 and the belt winding by the power of the motor 10 controlled in the established power is performed. Then, at step S13, in the same way as that at the step S7 mentioned above, the detection of the increase in the motor current is determined. When the detection of the increase in the motor current is not determined, since the belt winding by the power of the motor 10 is not yet completed, the process on step S13 is repeated. When the detection of the increase in the motor current is determined, the time counting is stopped in the same way as that at the step S8 mentioned above, and after the motor 10 is turned off at step S15, it is turned on in the opposite direction, i.e., in the belt extraction direction. Subsequently, at step S16, the motor-power transmission device 5 is turned off while the motor 10 is turned off. Furthermore, at step S17, based on the time counting value of the counter and the present set-up power, the established power is computed so as to update the set-up power to be the obtained value. In addition, when the obtained power value is the same as the present set-up power, the present set-up power is maintained as it is. Then, by shifting to step S11, the process at the step S11, i.e., the time counting value of the counter is reset to be zero. In such a manner, the winding of the seatbelt webbing 3 by the power of the motor 10 is completed.

In such a manner, in the seatbelt retractor 1 according to the embodiment, even when the winding force due to the spring cannot be efficiently utilized because of the aging, etc., the entire amount of the seatbelt webbing can be securely wound up.

In addition, according to the embodiment described above, the retainer lever 49 of the power-transmission route switching mechanism 13 is mechanically operated while the motor-power transmission device 5 is turned on and off by mechanically engaging the ratchet gear 44b of the internal gear 44 with the retainer lever 49 with the difference between the rotation of the motor 10 and the rotation of the spool. Also, the retainer lever 49 of the power-transmission route switching mechanism 13 may be operated by an electric force or electromagnetic force while the turning on and off of the motor-power transmission device 5 may be performed with the motor control device 6 by controlling the operation of the retainer lever 49 with the motor control device 6.

### [Advantages]

As is apparent from the description above, in the seatbelt retractor according to the present invention, when the winding speed during the winding of the seatbelt webbing by the spring is reduced smaller than a predetermined value, the motor-power transmission device is turned on so as to connect the motor-power transmission path, so that the seatbelt webbing can be wound about the spool by the motor power. Thereby, even when the winding force due to the spring cannot be effectively utilized, the entire amount of the seatbelt webbing can be securely wound up.

In particular, when the winding speed of the seatbelt webbing by the spring during winding is reduced to be less than the constant value, so that the winding speed, which is input in the motor-power transmission device by the motor power, rather becomes larger than the winding speed of the seatbelt webbing during winding, which is input in the motor-power transmission device by the spring, the motor-power transmission device is turned on, so that the motor power can be transmitted to the spool via the motor-power transmission device. Thereby, the motor-power transmission device is simply connected mechanically so that the seatbelt webbing can be wound about the spool by the motor power.

Preferably, since the completion of seatbelt winding by the spool is detected by detecting that the motor becomes a stalling state and the motor current increases, by simply detecting the increase in the motor current, the completion of seatbelt winding can be simply detected, so that the motor is securely stopped.

Furthermore, since the driving output of the motor is preferably controlled by corresponding to a period of time from the initiation of the motor rotation in the belt winding direction to the detection of the increase in the motor current, the driving output of the motor can be controlled by corresponding to the degree that the winding force due to the spring cannot be efficiently utilized. Thereby, the driving of the motor is optimally controlled so that the motor power can be utilized efficiently.

## Claims

1. A seatbelt retractor (1) capable of winding seatbelt webbing (3) by rotating a spool (4) in a belt winding direction (CCW) with a spring (14) wherein the seatbelt retractor (1) is additionally capable of winding the seatbelt webbing (3) by rotating the spool (4) in the belt winding direction (CCW) by controlling a motor (10) with a motor control device (6), the seatbelt retractor (1) comprising:
a motor-power transmission path (11, 12) for transmitting power of the motor (10) to the spool (4);
a motor-power transmission device (5) that is turned on only when the motor (10) rotates in the belt winding direction (CCW) so as to connect the motor-power transmission path (11, 12) and transmit power of the motor (10) to the spool (4) by controlling the connecting and shutting off of the motor-power transmission path (11, 12);
a tongue;
a buckle; and
a buckle switch (7) for detecting cancellation of the engagement between the tongue and the buckle,
**characterized in that** the motor control device (6) is configured to rotate the motor (10) in the belt winding direction (CCW) after a predetermined period of time since a buckle-releasing signal is received from the buckle switch (7) while the motor-power transmission device (5) is configured to turn on when a winding speed of the seatbelt webbing (3) during winding with the spring is not more than a predetermined value so as to connect the motor-power transmission path (11, 12).

2. A seatbelt retractor (1) according to Claim 1, wherein the seatbelt retractor (1) is configured in such a manner that in a normal state, the motor-power transmission device (5) is turned off so as to shut off the motor-power transmission path (11, 12) by setting a winding speed of the seatbelt webbing (3) during winding, which is input in the motor-power transmission device (5) by the spring (14), to be larger than a winding speed, which is input in the motor-power transmission device (5) by power of the motor (10), while when the winding speed of the seatbelt webbing (3) during winding by the spring (14) is not more than a predetermined value, the motor-power transmission device (5) is turned on so as to connect the motor-power transmission path (11, 12) by increasing the winding speed of the seatbelt webbing (3), which is input in the motor-power transmission device (5) by power of the motor (10), to be larger than the winding speed, which is input in the motor-power transmission device (5) by the spring (14).

3. A seatbelt retractor (1) according to Claim 1 or 2, further comprising a motor current detector (8) for detecting a motor current of the motor (10), wherein the motor control device (6) is configured to stop the motor (10) based on a motor current detection signal from the motor current detector (8), when detecting an increase in the motor current due to winding of the entire amount of the seatbelt webbing (3) around the spool (4).

4. A seatbelt retractor (1) according to Claim 3, wherein the motor control device (6) is configured to count a period of time from the initiation of the motor rotation in the belt winding direction (CCW) to the detection of the increase in the motor current so as to control a driving output of the motor (10) corresponding to the counted value.

## Patentansprüche

1. Sicherheitsgurtaufrollvorrichtung (1), welche einen Sicherheitsgurt (3) aufwickeln kann, indem sich eine Spule (4) in einer Gurtaufwickelrichtung (CCW) mit einer Feder (14) dreht, wobei die Sicherheitsgurtaufwickelvorrichtung (1) zusätzlich den Sicherheitsgurt (3) aufwickeln kann, indem sich die Spule (4) in der Gurtaufwickelrichtung (CCW) dreht, wobei ein Motor (10) mit einer Motorsteuervorrichtung (6) gesteuert wird, wobei die Sicherheitsgurtaufwickelvorrichtung (1) umfasst: einen Übertragungsweg (11, 12) für eine Motorleistung, um die Leistung des Motors (10) zu der Spule (4) zu übertragen;
eine Übertragungsvorrichtung (5) für die Motorleistung, welche nur eingeschaltet ist, wenn sich der Motor (10) in der Gurtaufwickelrichtung (CCW) dreht, um so den Übertragungsweg (11, 12) für die Motorleistung zu schließen und die Leistung des Motors (10) zu der Spule (4) zu übertragen, wobei das Schließen und ein Sperren des Übertragungsweges (11, 12) für die Motorleistung gesteuert wird;
eine Zunge;
eine Schnalle; und
einen Schnallenschalter (7), um eine Aufhebung des Eingriffes zwischen der Zunge und der Schnalle zu erfassen,
**dadurch gekennzeichnet,**
**dass** die Motorsteuervorrichtung (6) derart ausgestaltet ist, dass sie den Motor (10) in der Gurtaufwickelrichtung (CCW) eine vorbestimmte Zeitperiode nachdem ein Schnallenlösesignal von dem Schnallenschalter (7) empfangen worden ist, dreht, während die Übertragungsvorrichtung (5) für die Motorleistung derart ausgestaltet ist, dass sie sich einschaltet, wenn eine Aufwickelgeschwindigkeit des Sicherheitsgurts (3) während eines Aufwickelns mit der Feder nicht oberhalb eines vorbestimmten Wertes liegt, um so den Übertragungsweg (11, 12) für die Motorleistung zu schließen.

2. Sicherheitsgurtaufrollvorrichtung (1) nach Anspruch 1, wobei die Sicherheitsgurtaufrollvorrichtung (1) in solch einer Weise ausgestaltet ist, dass in einem normalen Zustand, wobei die Übertragungsvorrichtung (5) für die Motorleistung abgeschaltet ist, um so den Übertragungsweg (11, 12) für die Motorleistung zu sperren, eine Aufrollgeschwindigkeit des Sicherheitsgurts (3) während des Aufwickelns derart festliegt, welche in der Übertragungsvorrichtung (5) für die Motorleistung durch die Feder (14) vorliegt, dass sie größer als eine Aufwickelgeschwindigkeit ist, welche in der Übertragungsvorrichtung (5) für die Motorleistung durch die Leistung des Motors (10) vorliegt, während, wenn die Aufwickelgeschwindigkeit des Sicherheitsgurts (3) während des Aufwickelns durch die Feder (14) nicht oberhalb einem vorbestimmten Wert liegt, die Übertragungsvorrichtung (5) für die Motorleistung eingeschaltet wird, um so den Übertragungsweg (11, 12) für die Motorleistung zu schließen, wobei die Aufwickelgeschwindigkeit des Sicherheitsgurts (3) erhöht wird, welche in der Übertragungsvorrichtung (5) für die Motorleistung durch die Leistung des Motors (10) vorliegt, damit sie größer als die Aufwickelgeschwindigkeit ist, welche in der Übertragungsvorrichtung (5) für die Motorleistung durch die Feder (14) vorliegt.

3. Sicherheitsgurtaufrollvorrichtung (1) nach Anspruch 1 oder 2, weiter einen Motorstromdetektor (8) umfassend, um einen Motorstrom des Motors (10) zu erfassen, wobei die Motorstromvorrichtung (6) derart ausgestaltet ist, dass sie den Motor (10) basierend auf einem erfassten Motorstromsignal von dem Motorstromdetektor (8) anhält, wenn ein Anstieg bezüglich des Motorsstroms aufgrund eines Aufwickelns des gesamten Sicherheitsgurts (3) um die Spule (4) erfasst wird.

4. Sicherheitsgurtaufrollvorrichtung (1) nach Anspruch 3, wobei die Motorsteuervorrichtung (6) derart ausgestaltet ist, dass sie eine Zeitperiode von dem Beginn der Motordrehung in der Gurtaufrollvorrichtung (CCW) bis zu der Erfassung des Anstiegs bezüglich des Motorsstroms zählt, um so eine Antriebsausgangsleistung des Motors (10) entsprechend des gezählten Wertes zu steuern.

## Revendications

1. Un rétracteur de ceinture de sécurité (1) capable d'enrouler une sangle de ceinture de sécurité (3) en faisant tourner une bobine (4) dans le sens d'enroulement de la ceinture (sens antihoraire AH) au moyen d'un ressort (14), dans lequel le rétracteur de ceinture de sécurité (1) est en outre capable d'enrouler la sangle de ceinture de sécurité (3) en faisant tourner la bobine (4) dans le sens d'enroulement de la bobine (AH) en commandant un moteur (10) avec un dispositif de commande du moteur (6), le rétracteur de ceinture de sécurité (1) comprenant:
- une voie de transmission de la puissance du moteur (11, 12) pour transmettre la puissance du moteur (10) à la bobine (4);
- un dispositif de transmission de la puissance du moteur (5), qui est mis en marche uniquement quand le moteur (10) tourne dans le sens d'enroulement de la ceinture (AH), pour relier la voie de transmission de la puissance du moteur (11, 12) et transmettre la puissance du moteur (10) à la bobine (4), en commandant l'activation et la désactivation de la voie de transmission de la puissance du moteur (11, 12);
- une languette;
- une boucle de ceinture de sécurité; et
- un commutateur de boucle de ceinture de sécurité (7) pour détecter l'annulation de l'accrochage entre la languette et la boucle de ceinture de sécurité,
**caractérisé en ce que** le dispositif de commande du moteur (6) est configuré pour faire tourner le moteur (10) dans le sens d'enroulement de la ceinture (AH) après une période de temps prédéterminée à compter de la réception d'un signal de retrait de la boucle provenant du commutateur de boucle de ceinture de sécurité (7), tandis que le dispositif de transmission de la puissance du moteur (5) est configuré pour se mettre en marche quand la vitesse d'enroulement de la sangle de ceinture de sécurité (3) pendant l'enroulement par le ressort est inférieure à une valeur prédéterminée, afin de relier la voie de transmission de la puissance du moteur (11, 12).

2. Un rétracteur de ceinture de sécurité (1) selon la revendication 1, ledit rétracteur de ceinture de sécurité (1) étant configuré de telle sorte qu'à l'état normal, le dispositif de transmission de la puissance du moteur (5) est arrêté, afin de désactiver la voie de transmission de la puissance du moteur (11, 12) en établissant que la vitesse d'enroulement de la sangle de ceinture de sécurité (3) pendant l'enroulement, qui est entrée dans le dispositif de transmission de la puissance du moteur (5) par le ressort (14), est supérieure à une vitesse d'enroulement, qui est entrée dans le dispositif de transmission de la puissance du moteur (5) par la puissance du moteur (10), tandis que lorsque la vitesse d'enroulement de la sangle de ceinture de sécurité (3) pendant l'enroulement par le ressort (14) ne dépasse pas une valeur prédéterminée, le dispositif de transmission de la puissance du moteur (5) est mis en marche, afin de relier la voie de transmission de la puissance du moteur (11, 12) en augmentant la vitesse d'enroulement de la sangle de ceinture de sécurité (3), qui est entrée dans le dispositif de transmission de la puissance du moteur (5) par la puissance du moteur (10), au-dessus de la vitesse d'enroulement, qui est entrée dans le dispositif de transmission de la puissance du moteur (5) par le ressort (14).

3. Un rétracteur de ceinture de sécurité (1) selon la revendication 1 ou 2, comprenant en outre un détecteur de courant moteur (8) pour détecter un courant moteur (10), dans lequel le dispositif de commande du moteur (6) est configuré pour arrêter le moteur (10) en fonction d'un signal de détection du courant moteur provenant du détecteur de courant moteur (8), quand est détectée une augmentation du courant moteur due à l'enroulement de la totalité de la sangle de ceinture de sécurité (3) autour de la bobine (4).

4. Un rétracteur de ceinture de sécurité (1) selon la revendication 3, dans lequel le dispositif de commande du moteur (6) est configuré pour compter une période de temps allant du début de la rotation du moteur dans le sens d'enroulement de la ceinture (AH) jusqu'à la détection de l'augmentation du courant moteur, afin de commander une sortie d'entraînement du moteur (10) correspondant à la valeur comptée.
